# FASCICULE DE BREVET EUROPEEN

(11) **EP 1 575 362 B1**
(45) Date de publication et mention de la délivrance du brevet: **23.08.2006**
(21) Numéro de dépôt: 03813578.6
(22) Date de dépôt: 18.12.2003
(51) Int. Cl.: A01N 59/04, A01N 59/00

(54) **UTILISATION D'UNE POUDRE ACARICIDE**
VERWENDUNG EINES AKARIZIDEN PULVERS
USE OF AN ACARICIDAL POWDER

(30) Priorité: 19.12.2002 FR 0216448
(43) Date de publication de la demande: 21.09.2005
(73) Titulaire: SOLVAY (Société Anonyme), 1050 Bruxelles (BE)
(72) Inventeur: PASCAL, Jean-Philippe, F-54000 NANCY (FR); PALANGIE, Nicolas, I-21100 Varese (FR)
(74) Mandataire: Gilliard, Pierre
(86) Numéro de dépôt international: PCT/EP2003/014524
(87) Numéro de publication internationale: WO 2004/056184

(56) Documents cités:
- WO-A-02/102158
- US-A- 5 342 630
- US-A- 5 439 690
- US-A- 5 773 017

## Description

L'invention concerne une utilisation d'une poudre acaricide. Plus particulièrement, elle concerne son utilisation dans la protection des céréales.

Par poudre acaricide on entend une poudre au contact de laquelle les acariens ne peuvent survivre. Les acariens peuvent être à l'état d'oeufs, de larves ou adultes. L'action de la poudre peut être directe. Elle peut aussi être indirecte, par exemple lorsque la poudre acaricide détruit une substance nécessaire à la survie de l'acarien.

Les acariens sont de petits arachnides, de dimensions proches du dixième de millimètre, qui se développent notamment dans les literies et tapis des habitations et susceptibles de provoquer des réactions allergiques chez l'être humain. Leurs conditions de vie optimales requièrent une humidité comprise entre 55 et 85 % et une température comprise entre 15 et 35°C. Les acariens se nourrissent essentiellement des squames et matières organiques qui s'accumulent dans les textiles épais. Un adulte humain perd en moyenne 1,5 g de peau morte par jour, ce qui suffit à nourrir 1,5 millions d'acariens.

Parmi la diversité d'acariens existants, certains sont particulièrement préoccupants car ils se développent dans l'environnement humain. Il s'agit principalement des acariens de la poussière (Dermatophagoides pteronyssinis) et de ceux se développant dans les céréales (Acarus Siro et Tyrophagus putrescentiae).

Il est connu et largement répandu de combattre les acariens au moyen de pyrèthre et de pyréthrinoïdes de synthèse, tels que la perméthrine. Ces substances sont des neuro-toxiques dont la nocivité pour l'homme est de plus en plus établie. Leur utilisation dans la protection des denrées alimentaires et plus particulièrement des céréales est à éviter.

Des substituts aux pyréthrinoïdes, qui soient inoffensifs pour l'homme, et efficaces dans la lutte contre les acariens se développant dans les stocks de céréales sont donc réclamés par de nombreux utilisateurs.

L'invention vise à fournir une méthode, naturelle et inoffensive pour l'homme, permettant d'éliminer de manière simple, efficace et économique, les acariens se développant dans les stocks de céréales.

En conséquence, l'invention concerne l'utilisation d'une poudre comprenant plus de 40 % en poids de bicarbonate de sodium pour ses effets acaricides dans le stockage des céréales.

Le bicarbonate de sodium est un produit réputé inoffensif pour l'homme. Il est même autorisé par différents organismes (tels la FDA aux Etats-Unis) dans l'alimentation humaine. Le bicarbonate de sodium peut donc être utilisé sans danger dans la protection des céréales, pour ses effets acaricides. De plus, il s'est avéré particulièrement efficace contre les acariens mentionnés ci-dessus se développant dans les céréales.

On a observé que les acariens ne mangent pas la poudre acaricide conforme à l'invention mais que les grains fins de cette poudre adhèrent à la surface extérieure des acariens. Sans vouloir être lié par une explication théorique et sans exclure d'autres modes d'action, l'inventeur pense que l'utilisation d'une poudre conforme à l'invention comme acaricide détériorerait certains équilibres d'échanges membranaires du cuticule de l'acarien et de la coquille de l'oeuf, ce qui induirait leur déshydratation et finalement leur mort.

La poudre acaricide selon l'invention peut être utilisée en mélange avec les céréales. Elle peut également être appliquée uniquement sur les parois du moyen de stockage (silos, sacs, camions ...) des céréales. Par stockage, on entend, au sens large, non seulement la conservation pendant de longues durées, mais aussi des conservations pendant des durées courtes pouvant survenir lors de la manutention des céréales récoltées.

Dans un mode de réalisation avantageux de l'invention, les céréales sont stockées dans un silo et la poudre est projetée sur les parois du silo. Dans ce mode de réalisation, il peut être dans certains cas préférable d'appliquer la poudre sous forme de solution ou suspension aqueuse et d'attendre son évaporation avant l'introduction des céréales dans le silo. Après évaporation on a observé que la paroi du silo est couverte d'une poudre très fine.

Des poudres ayant des granulométries fines sont apparues avoir un pouvoir acaricide plus élevé.

Dans un mode d'exécution avantageux de l'invention, on utilise une poudre dont au moins 90 % des granules qui la constituent ont un diamètre inférieur à 500µm. Il est toutefois préférable que les granules ne soient pas trop fins. Des poudres telles que au moins 90 % des granules qui les constituent aient un diamètre compris entre 1 µm et 500 µm conviennent en général bien.

Des poudres acaricides conformes à l'invention dont 90 % des granules ont un diamètre inférieur à 100 µm sont préférées.

La poudre acaricide comprend plus de 40 % en poids de bicarbonate de sodium. On préfère qu'elle comprenne au moins 50 % de bicarbonate de sodium.

Dans un mode de réalisation avantageux de l'invention, la poudre acaricide comprend au moins 95 % de bicarbonate de sodium. Elle peut être constituée essentiellement de bicarbonate de sodium.

Dans un mode de réalisation avantageux de l'invention, la poudre acaricide ne comprend aucune substance neurotoxique. En particulier, la poudre ne contient ni pyrèthre ni pyréthrinoïdes de synthèse, tels que la perméthrine.

Un autre aspect de l'invention concerne l'utilisation d'une poudre selon l'invention pour ses effets combinés acaricides et insecticides.

En effet, les céréales peuvent également être endommagées par certains insectes qui s'y développent couramment. Il s'agit notamment du charançon du blé (Stophilus Granarius) et du capucin des grains (Rhizopertha Dominica). Ces insectes sont particulièrement nuisibles car ils pondent leurs oeufs à l'intérieur des grains de céréales. La poudre selon l'invention est apparue combattre également ces insectes. Sans vouloir être lié par une explication théorique et sans exclure d'autres modes d'action, l'inventeur pense que le mode d'action de la poudre selon l'invention sur les insectes diffère par rapport à celui sur les acariens. En effet les insectes semblent absorber le bicarbonate de sodium. Après absorption, le bicarbonate provoquerait une augmentation de pression à l'intérieur de l'insecte par libération de gaz, ce qui provoquerait sa mort.

Dans un mode d'exécution avantageux de cet aspect de l'invention, on utilise une poudre comprenant en outre au moins 1% en poids de silice. La silice est connue pour ses effets insecticides dans les céréales. Toutefois, on a observé de manière surprenante que l'ajout de quantités minimes (par exemple quelques pourcents) de silice au bicarbonate fournit une poudre dont les effets insecticides, contre les capucins des grains et les charançons des blés, peuvent être supérieurs tant à ceux du bicarbonate seul qu'à ceux de la silice seule. De plus de tels mélanges présentent un grand intérêt économique, le bicarbonate de sodium étant moins cher que la silice.

La silice peut être amorphe ou cristalline. La silice amorphe est cependant préférable car sa tolérance par l'organisme humain est meilleure. Des silices amorphes synthétiques se présentant sous forme de silice précipitée sont bien connues. Le séchage par atomisation des silices précipitées donne lieu à des produits extrêmement fins, qui conviennent bien. De très bons résultats ont également été obtenus avec des silicagels. Le silicagel est le résultat de la réaction d'un acide avec une solution de silicate de sodium. Le gel obtenu est ensuite séché et broyé finement. De tels produits présentent l'avantage d'être plus économiques.

Dans une variante préférée de ce mode d'exécution, la silice est sous forme de silicagel.

Les stocks de céréales sont aussi soumis aux dégâts causés par divers microorganismes tels que Aspergillus et Penicillium. La poudre acaricide selon l'invention s'est également révélée efficace comme fongicide permettant de combattre ces microorganismes.

En conséquence, l'invention concerne également l'utilisation d'une poudre selon l'invention pour ses effets combinés acaricides, insecticides et fongicides.

Les exemples dont la description suit vont mettre en évidence l'intérêt de l'invention.

### Exemple 1

On a déposé 10 g de poudre de bicarbonate de sodium, ayant une granulométrie telle que 100 % des particules ont un diamètre inférieur à 160µ et au moins 95% un diamètre inférieur à 100µ, au fond d'une boîte de Pétri. 50 acariens du blé « Acarus Siro » ont ensuite été déposés sur la poudre.

On a observé après 48 heures la mort de 95% des acariens (moyenne sur 3 échantillons). Dans le cas d'un échantillon témoin, conservé dans les mêmes conditions mais sans bicarbonate de sodium, seuls 2% des acariens sont morts (moyenne sur 3 échantillons).

### Exemple 2

On a procédé comme pour l'exemple 1 sauf qu'on a utilisé des acariens du fromage « Tyrophagus Putrescentiae ». On a dans ce cas observé la mort de 100% des acariens après 24heures. Aucun acarien de l'échantillon témoin n'était mort après 24 heures et 4% étaient morts après 48 heures.

Les exemples 1 et 2 illustrent l'effet acaricide selon l'invention, en particulier pour les acariens se développant dans les céréales.

### Exemple 3

Dans cet exemple on a utilisé une poudre comprenant 96% de bicarbonate de sodium et 4% de silice amorphe précipitée pyrogénée (Aérosil® 200 produit par Degussa). La poudre a une granulométrie telle que 100 % des particules ont un diamètre inférieur à 160µ et au moins 95% un diamètre inférieur à 100µ.

On a déposé 10 g de poudre au fond d'une boîte de Pétri. 50 insectes « Capucins des grains » (Rhizopertha Dominica) ont ensuite été déposés sur la poudre, de même que suffisamment de nourriture pour assurer une survie de 15 jours.

On a observé après 48 heures la mort de 47 % des insectes (moyenne sur 3 échantillons). Dans le cas d'un échantillon témoin, conservé dans les mêmes conditions mais sans bicarbonate de sodium, aucun insecte n'était mort (moyenne sur 3 échantillons). Après 72 heures la mortalité des insectes traités conformément à l'invention atteint 79 % et après 4 jours 100 %, tandis que celle des insectes de l'échantillon témoin est nulle jusqu'à 72 heures et ne dépasse pas 2 % après 4 jours.

### Exemples 4 et 5

Dans les exemples 4 et 5 on a procédé comme dans l'exemple 3 sauf que dans l'exemple 4 on a utilisé une poudre constituée essentiellement de bicarbonate de sodium et dans l'exemple 5 constituée essentiellement de silice (silicagel). Les mortalités après 48 heures ont été de 2% pour le bicarbonate et de 100 % pour la silice. Une comparaison des exemples 3, 4 et 5 illustre l'effet insecticide surprenant obtenu sur les capucins des grains en additionnant une quantité minime de silice à la poudre de bicarbonate.

Le tableau 1 résume les résultats des essais effectués sur les capucins des grains.

**Tableau 1 : Essais sur Rhizopertha Dominica (en % de mortalité)**

| | 48h | 72h | 4 jours | 7 jours | 10 jours | 15 jours |
|---|---|---|---|---|---|---|
| Bicarbonate de sodium | 2% | 8% | 15% | 21% | 43% | 91% |
| Silice (silicagel) | 100% | 100% | 100% | 100% | 100% | 100% |
| Bicar + 4 % Aerosil 200 | 47% | 79% | 100% | 100% | 100% | 100% |
| Témoin | 0% | 0% | 2% | 5% | 9% | 11% |

### Exemples 6 à 8

Dans les exemples 6 à 8 on a procédé comme dans les exemples 3 à 5 sauf que le Capucin des grains a été remplacé par le Charançon des blés (Sitophilus Granarius). On a également comparé l'effet de différentes silices et d'un mélange de terre de diatomée additionnée de 10 % de silicagel. Le tableau 2 résume les résultats obtenus. Ils illustrent encore l'efficacité surprenante des mélanges bicarbonate - silice comparés à la silice ou au bicarbonate seul. Ils montrent également les très bons résultats obtenus en utilisant du silicagel.

**Tableau 2 : Essai sur Sitophilus Granarius (en % de mortalité)**

| | 24h | 48h | 72h | 4 jours | 7 jours | 10 jours | 15 jours |
|---|---|---|---|---|---|---|---|
| Bicarbonate de sodium | 0% | 0% | 1% | 5% | 9% | 55% | 100% |
| Terre de diatomée + 10 % silicagel | 2% | 35% | 83% | 100% | 100% | 100% | 100% |
| Bicar + 4 % Aerosil 200 | 12% | 37% | 82% | 100% | 100% | 100% | 100% |
| Bicar + 10% Silicagel | 16% | 41% | 76% | 100% | 100% | 100% | 100% |
| Bicar + 4% Sipernat 22S | 19% | 38% | 77% | 100% | 100% | 100% | 100% |
| témoin | 0% | 0% | 0% | 3% | 9% | 13% | 15% |

## Revendications

1. Utilisation d'une poudre comprenant plus de 40 % en poids de bicarbonate de sodium pour ses effets acaricides dans le stockage des céréales.

2. Utilisation selon la revendication précédente dans laquelle les céréales sont stockées dans un silo et la poudre est projetée sur les parois du silo.

3. Utilisation selon l'une quelconque des revendications précédentes dans laquelle au moins 90 % des granules qui constituent la poudre ont un diamètre inférieur à 500 µm.

4. Utilisation selon la revendication précédente dans laquelle le diamètre est inférieur à 100 µm.

5. Utilisation selon l'une quelconque des revendications précédentes dans laquelle la poudre comprend au moins 95 % de bicarbonate de sodium.

6. Utilisation selon l'une quelconque des revendications précédentes dans laquelle la poudre est exempte de substances neurotoxiques.

7. Utilisation selon l'une quelconque des revendications précédentes pour ses effets combinés acaricides et insecticides.

8. Utilisation selon l'une quelconque des revendications précédentes dans laquelle la poudre comprend au moins 1% en poids de silice.

9. Utilisation selon la revendication précédente dans laquelle la silice est du silicagel.

10. Utilisation selon l'une quelconque des revendications 7 à 9 pour ses effets combinés acaricides, fongicides et insecticides.

## Claims

1. Use of a powder comprising more than 40% by weight of sodium bicarbonate, for its acaricidal effects in the storage of cereals.

2. Use according to the preceding claim, in which the cereals are stored in a silo and the powder is projected onto the walls of the silo.

3. Use according to either one of the preceding claims, in which at least 90% of the granules that constitute the powder have a diameter of less than 500 µm.

4. Use according to the preceding claim, in which the diameter is less than 100 µm.

5. Use according to any one of the preceding claims, in which the powder comprises at least 95% of sodium bicarbonate.

6. Use according to any one of the preceding claims, in which the powder is free of neurotoxic substances.

7. Use according to any one of the preceding claims, for its combined acaricidal and insecticidal effects.

8. Use according to any one of the preceding claims, in which the powder comprises at least 1% by weight of silica.

9. Use according to the preceding claim, in which the silica is silica gel.

10. Use according to any one of Claims 7 to 9, for its combined acaricidal, fungicidal and insecticidal effects.

## Patentansprüche

1. Verwendung eines mehr als 40 Gew.% Natriumbicarbonat enthaltenden Pulvers wegen seiner akariziden Wirkungen in der Lagerung von Getreide.

2. Verwendung gemäß dem vorstehenden Anspruch, worin das Getreide in einem Silo gelagert wird und das Pulver auf die Silowände aufgespritzt wird.

3. Verwendung gemäß einem der vorstehenden Ansprüche, worin wenigstens 90 % der das Pulver ausbildenden Körner einen Durchmesser von unter 500 µm aufweisen.

4. Verwendung gemäß dem vorstehenden Anspruch, worin der Durchmesser unter 100 µm liegt.

5. Verwendung nach einem der vorstehenden Ansprüche, worin das Pulver wenigstens 95 % Natriumbicarbonat umfaßt.

6. Verwendung nach einem der vorstehenden Ansprüche, worin das Pulver frei von neurotoxischen Substanzen ist.

7. Verwendung nach einem der vorstehenden Ansprüche wegen der kombinierten akariziden und insektiziden Wirkungen.

8. Verwendung nach einem der vorstehenden Ansprüche, worin das Pulver wenigstens 1 Gew.% Kieselsäure umfaßt.

9. Verwendung gemäß dem vorstehenden Anspruch, worin die Kieselsäure Silicagel ist.

10. Verwendung nach einem der Ansprüche 7 bis 9 wegen der kombinierten akariziden, fungiziden und insektiziden Wirkungen.
